# FASCICULE DE BREVET EUROPEEN

(11) **EP 2 333 747 B1**
(45) Date de publication et mention de la délivrance du brevet: **13.07.2016**
(21) Numéro de dépôt: 10170202.5
(22) Date de dépôt: 20.07.2010
(51) Int. Cl.: G09B 23/12, G09B 25/02

(54) **DÉMONSTRATEUR DE PROPRIÉTÉ HYDROPHOBE**
DEMONSTRIERER VON HYDROPHOBEN EIGENSCHAFTEN
DEMONSTRATOR OF HYDROPHOBIC PROPERTIES

(30) Priorité: 09.11.2009 FR 0957907
(43) Date de publication de la demande: 15.06.2011
(73) Titulaire: ESSILOR INTERNATIONAL (Compagnie Générale d'Optique), 94220 Charenton le Pont (FR)
(72) Inventeur: Calandrini, Fabien, 94220 Charenton-le-Pont (FR); Nadolny, Carole, 94220 Charenton-le-Pont (FR)
(74) Mandataire: Cabinet Plasseraud

(56) Documents cités:
- FR-A1- 2 886 652
- US-A1- 2005 064 209
- US-A1- 2006 076 288

## Description

La présente invention concerne un démonstrateur de propriété hydrophobe. Elle peut être particulièrement utile pour montrer un comportement hydrophobe de verres de lunettes.

L'utilisation de nombreux articles manufacturés est améliorée lorsque ces articles présentent un comportement hydrophobe. Un tel comportement se caractérise par un étalement qui est réduit pour une goutte d'eau présente sur la surface de l'article. Lorsqu'un tel comportement hydrophobe est efficace et que la surface de l'article est inclinée, la goutte d'eau roule sur cette surface sans s'accrocher à celle-ci. De plus, si la goutte d'eau est envoyée avec une vitesse contre l'article, elle peut rebondir sur sa surface, éventuellement en éclatant, mais sans s'étaler au point d'impact.

Des articles manufacturés qui sont avantageusement hydrophobes sont par exemple des verres de lunettes, des miroirs, des pare-brises, des systèmes de versement de liquide, des nappes, des revêtements de récipients, etc. Il est alors souvent nécessaire de montrer l'efficacité de la fonction hydrophobe de l'article, ou de comparer les efficacités de traitements différents qui sont destinés à conférer la fonction hydrophobe à l'article.

Par exemple, le document US 2006/0076288 décrit un procédé de la fabrication d'une membrane hydrophobe.

Un premier but de l'invention est donc de proposer un système de présentation et d'appréciation du comportement hydrophobe d'un échantillon d'article manufacturé.

Un second but de l'invention est de proposer un tel système qui soit simple, autonome et peu onéreux, pour pouvoir être installé et utilisé rapidement lors de séances de démonstration ou sur des stands d'exposition.

Un troisième but de l'invention est de permettre de démontrer d'une façon qui soit convaincante, fiable et reproductible, l'efficacité d'une fonction hydrophobe.

Pour atteindre ces buts et d'autre, l'invention propose un démonstrateur de propriété hydrophobe d'un échantillon, qui comprend :
- un support d'échantillon, comportant au moins un emplacement d'échantillon agencé pour exposer une surface de l'échantillon qui est placé sur ce support, avec une inclinaison de la surface de l'échantillon par rapport à une direction verticale ;
- un réservoir supérieur, qui est adapté pour contenir une quantité d'eau déminéralisée, avec au moins un trou dans un fond de ce réservoir, et qui est disposé au dessus du support d'échantillon de sorte que des gouttes d'eau tombent une à une par le trou sur la surface de l'échantillon ; et
- un système d'alimentation du réservoir supérieur en eau déminéralisée, qui est adapté pour maintenir un niveau d'eau sensiblement constant au dessus du fond du réservoir.

Selon une caractéristique supplémentaire de l'invention, le trou possède un diamètre et un profil d'alésage qui sont adaptés pour que les gouttes se forment et tombent spontanément à intervalles de temps réguliers.

Un démonstrateur selon l'invention comporte donc peu d'éléments séparés, est léger, peu encombrant et peu onéreux, et peut être assemblé rapidement sur un stand de démonstration.

En outre, la combinaison des caractéristiques du trou avec l'obtention d'un niveau d'eau qui est constant dans le réservoir supérieur assure que les gouttes tombent de façon régulière et constante, avec une taille de gouttes et une vitesse d'impact des gouttes sur la surface de l'échantillon qui sont reproductibles et aussi constantes. Un démonstrateur selon l'invention est donc particulièrement fiable. De plus, l'utilisation d'eau déminéralisée assure qu'aucune obstruction du trou, même partielle, ne se produit après une durée prolongée de fonctionnement.

Dans des modes préférés de réalisation de l'invention, le trou peut posséder un alésage qui est cylindrique dans une partie supérieure du trou, et un alésage qui est conique dans une partie inférieure du même trou, avec un diamètre d'alésage qui croît vers le bas dans la partie inférieure du trou. En effet, un tel profil de trou produit des gouttes très reproductibles, selon un débit qui est quasi-constant. En particulier, l'augmentation du diamètre du trou vers le bas réduit des freins que constituent la capillarité et la tension superficielle de l'eau vis-à-vis du détachement des gouttes.

Dans divers modes de réalisation de l'invention, particulièrement avantageux pour démontrer efficacement la propriété hydrophobe de l'échantillon, l'un au moins des perfectionnements suivants pourra être utilisé, seul ou en combinaison avec d'autres :
- le démonstrateur peut être adapté pour que les gouttes se forment et tombent par le trou avec une fréquence qui est comprise entre 0,2 Hz et 2 Hz (Hertz) ;
- le fond du réservoir supérieur peut posséder une épaisseur qui est comprise entre 2,5 mm (millimètre) et 3,5 mm à l'endroit du trou, l'alésage cylindrique de la partie supérieure du trou peut posséder un diamètre qui est compris entre 0,6 mm et 0,8 mm, l'alésage conique de la partie inférieure du trou peut posséder un demi-angle d'ouverture qui est compris entre 10° et 30°, et les alésages cylindrique et conique peuvent avoir une jonction qui est située entre 0,25 mm et 2 mm à partir d'une surface externe inférieure du fond du réservoir supérieur ;
- une forme du réservoir supérieur et le système d'alimentation en eau déminéralisée peuvent être adaptés pour que la quantité d'eau qui est contenue dans le réservoir supérieur avec un niveau d'eau sensiblement constant, produise une pression hydrostatique comprise entre 2,5 millibars et 5 millibars à l'endroit du trou ;
- le démonstrateur peut comprendre en outre un bac inférieur, disposé pour récupérer les gouttes qui sont déjà tombées sur la surface de l'échantillon ;
- le système d'alimentation du réservoir supérieur en eau déminéralisée peut comprendre un dispositif de pompage pour recharger le réservoir supérieur à partir d'un contenu en eau déminéralisée du bac inférieur ;
- le support d'échantillon peut être adapté pour ajuster de façon variable l'inclinaison de la surface de l'échantillon par rapport à la direction verticale ; et
- une hauteur de chute des gouttes, qui est mesurée entre le trou et un point d'impact des gouttes sur la surface de l'échantillon, peut être comprise entre 5 cm et 20 cm, de préférence entre 7 cm et 15 cm.

Dans des versions préférées de l'invention, le support d'échantillon peut comporter plusieurs emplacements d'échantillons, qui sont agencés pour exposer côte à côte des surfaces respectives d'au moins deux échantillons placés sur le support, avec la même inclinaison de ces surfaces des échantillons par rapport à la direction verticale. Le réservoir supérieur est alors pourvu d'au moins deux trous identiques, qui sont disposés un à un au droit des emplacements d'échantillons, de sorte que des gouttes identiques se forment et tombent sur les surfaces respectives des échantillons. Un tel démonstrateur permet en effet de montrer en même temps les propriétés hydrophobes de plusieurs échantillons, afin de comparer visuellement et directement leurs efficacités en temps réel.

Pour des applications particulières d'un démonstrateur selon l'invention dans le domaine ophtalmique, le support d'échantillon peut être adapté pour recevoir au moins un verre de lunettes qui forme l'échantillon, de façon que les gouttes tombent sur une surface de ce verre de lunettes.

D'autres particularités et avantages de la présente invention apparaîtront dans la description ci-après d'un exemple de réalisation non limitatif, en référence aux dessins annexés, dans lesquels :
- la figure 1 est une vue en perspective d'un démonstrateur selon l'invention ; et
- les figures 2a et 2b sont des schémas de réalisation pour indiquer des dimensions utilisées.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques.

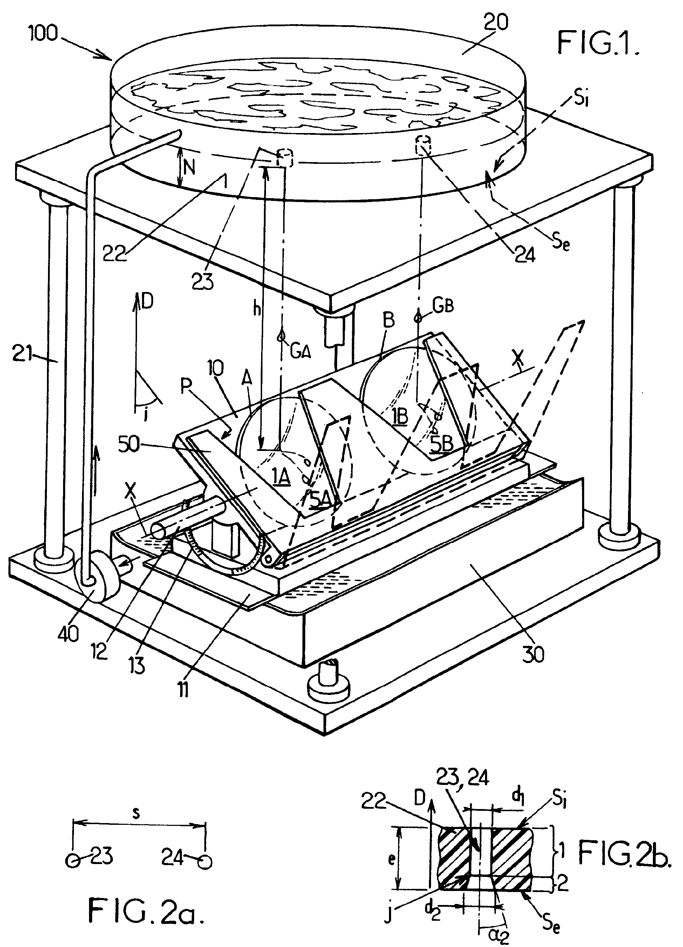

Sur les figures 1 et 2b, D désigne une direction verticale, qui est orientée vers le haut. La direction D est donc parallèle à la pesanteur terrestre au lieu d'installation du démonstrateur, et orientée en sens inverse de la pesanteur.

L'invention est maintenant décrite dans le cadre de la démonstration de propriétés hydrophobes de verres de lunettes. De tels verres de lunettes peuvent avoir un diamètre de 65 mm (millimètre), par exemple. Cette application est prise à titre d'illustration, étant entendu que la réalisation de l'invention qui est décrite maintenant peut être adaptée à d'autres articles manufacturés, dans le but de montrer les comportements hydrophobes de ceux-ci.

En outre, le démonstrateur qui est décrit dans la suite est adapté pour montrer simultanément les comportements hydrophobes de deux verres de lunettes, afin de permettre de les comparer directement. Mais il est entendu que cette description peut être adaptée pour un nombre quelconque de verres de lunettes qui sont testés en même temps, voire pour ne montrer qu'un seul verre de lunettes à la fois.

Par ailleurs, et d'une façon générale, le comportement hydrophobe pour lequel le démonstrateur est utilisé, peut être une propriété du matériau volumique («bulk material») qui constitue l'article manufacturé, notamment les verres de lunettes. Alternativement, le comportement hydrophobe peut être conféré à l'article par un traitement de surface, une couche qui est déposée sur cette surface, un film ou une structure feuilletée qui a été rapportée sur la surface de l'article ou du verre de lunettes.

En référence à la figure 1, le démonstrateur qui est référencé globalement 100 comprend un support d'échantillon 10, un réservoir supérieur 20, un bac de récupération 30 et un dispositif de pompage 40.

Le support 10 comporte deux emplacements 1 A et 1 B pour recevoir deux verres de lunettes A et B. Ces deux verres de lunettes A et B sont supportés dans un même plan P, dont l'inclinaison i peut être ajustée par rapport à la direction verticale D. Pour cela, le support 10 est monté en rotation autour d'un axe horizontal X-X, par rapport à une partie de base 11 du support 10. Un tambour de préhension 12 et une graduation angulaire 13 permettent d'ajuster l'inclinaison i, celle-ci restant constante ensuite.

Le réservoir 20 est supporté par une structure 21 à une hauteur constante h au dessus de la surface des verres A et B. La hauteur h, appelée hauteur de chute des gouttes d'eau, peut être égale à 10 cm (centimètre). Par exemple, le réservoir 20 peut être cylindrique d'axe vertical, avec un fond horizontal 22, un diamètre interne de 119 mm et une profondeur interne qui est supérieure à 40 mm. Le réservoir 20 est destiné à contenir de l'eau déminéralisée lors d'un fonctionnement du démonstrateur 100. Par ailleurs, le réservoir 20 est ouvert par le haut, pour que l'eau qu'il contient soit à la pression atmosphérique ambiante au niveau de sa surface libre supérieure.

Le fond 22 du réservoir 20 est pourvu de deux trous 23 et 24. Lorsque les verres de lunettes ont chacun un diamètre de 65 mm, les trous 23 et 24 peuvent être distants de 100 mm (figure 2a). De façon générale, les trous 23 et 24 sont situés chacun au droit, selon la direction verticale D, d'une partie centrale des verres A et B, le trou 23 au dessus du verre A et le trou 24 au dessus du verre B. Ainsi, lorsque le réservoir 20 contient de l'eau déminéralisée, des gouttes G_{A} et G_{B} se forment dans les ouvertures des trous 23 et 24, respectivement, et tombent sur les surfaces des verres A et B qui sont exposées vers le haut.

L'inclinaison i des surfaces des verres A et B est sélectionnée pour mettre en évidence les propriétés hydrophobes des surfaces supérieures des verres A et B, lorsque les gouttes G_{A} et G_{B} tombent sur ces surfaces. En outre, l'inclinaison i permet ensuite à l'eau des gouttes G_{A} et G_{B} d'être évacuée spontanément sur les surfaces des verres A et B. Par exemple, l'inclinaison i peut être égale à 45° (degré) environ.

Le bac 30 et le dispositif de pompage 40 ne sont pas indispensables, mais ils permettent une utilisation de l'eau déminéralisée en circuit fermé. Pour cela, le bac 30 est situé sous le support 10 de façon à recueillir l'eau qui coule des verres A et B, et le dispositif de pompage 40 renvoie cette eau dans le réservoir supérieur 20. Il n'est alors pas nécessaire de recharger périodiquement le démonstrateur 100 en eau déminéralisée, et l'ajustement du niveau d'eau N dans le réservoir supérieur 20 peut être automatique. Le dispositif 40 peut fonctionner continûment ou par intermittence, tout en maintenant le niveau d'eau N dans le réservoir supérieur 20 à une valeur qui est suffisamment constante pour que les gouttes G_{A} et G_{B} tombent régulièrement avec des tailles de gouttes constantes. Avantageusement, le dispositif de pompage 40 peut être une pompe péristaltique de petite capacité, alimentée en énergie par des piles. Un système de détection du niveau d'eau N peut éventuellement être utilisé dans le réservoir 20, mais un fonctionnement permanent du dispositif de pompage 40 peut assurer que le bac 30 est toujours presque vide, de sorte qu'un niveau de remplissage du réservoir 20 reste à peu près constamment à sa valeur initiale pendant un fonctionnement du démonstrateur 100.

Les deux trous 23 et 24 sont identiques. Chacun des trous 23 et 24 possède un diamètre et un profil qui sont ajustés en fonction d'une hauteur d'eau nominale dans le réservoir 20. De façon connue, cette hauteur d'eau détermine une pression hydrostatique qui est présente sur le fond 22 du réservoir 20, et donc dans l'ouverture des trous 23 et 24. Cette association des dimensions des trous avec la pression hydrostatique détermine la taille des gouttes d'eau qui tombent par chaque trou, et leur fréquence.

En particulier, aucun système d'activation n'est nécessaire pour déclencher la formation ou la chute de chaque goutte d'eau. Le démonstrateur 100 de l'invention est donc particulièrement simple et peu onéreux.

Dans un mode de réalisation qui est donné à titre d'exemple, chaque trou 23, 24 comprend une partie supérieure cylindrique qui est référencée 1 et une partie inférieure conique qui est référencée 2, de sorte que l'ouverture du trou est la plus grande au niveau de la surface externe inférieure Se du fond 22 (figure 2b). La partie cylindrique de chaque trou permet de fixer un débit de fuite régulier, alors que la partie conique évite que les forces de capillarité et la tension superficielle des gouttes n'inhibent le détachement de chaque goutte. Ce mode de réalisation procure un débit de gouttes qui est particulièrement régulier, et adapté pour mettre en évidence le comportement hydrophobe des verres de lunettes A et B.

Par exemple, le niveau d'eau déminéralisée N dans le récipient 20 peut être de 35 mm environ, mesuré à partir de la surface interne supérieure Sᵢ du fond 22. Cette valeur du niveau N correspond à une pression hydrostatique de 3,5 mbar (millibar) dans les trous 23 et 24. Lorsque le récipient 20 a une forme cylindrique avec un diamètre de 119 mm comme indiqué plus haut, il contient une quantité d'eau déminéralisée de 350 ml (millilitre), qui est presque constante pendant le fonctionnement du démonstrateur 100.

Les valeurs numériques suivantes sont données à titre d'illustration :
- épaisseur e du fond 22 : 3.0 mm environ
- diamètre d₁ de la partie supérieure cylindrique 1 de chaque trou 23, 24 : 0,7 mm environ
- demi-angle au sommet α₂ de la partie inférieure conique de chaque trou 23, 24 : 10°environ
- hauteur de la jonction j entre les parties supérieure cylindrique et inférieure conique de chaque trou 23, 24: 0,7 mm environ
- diamètre d₂ de la partie inférieure cylindrique 2 de chaque trou 23, 24, à l'ouverture dans la surface externe inférieure Se du fond 22 : 0,8 mm environ

Dans ces conditions, chaque trou 23, 24 produit des gouttes G_{A}, G_{B} avec une fréquence d'environ 1 Hz.

Pour faciliter l'observation du comportement hydrophobe des verres de lunettes A et B, le démonstrateur 100 peut comprendre en outre un ensemble de cache 50 qui est disposé au dessus du support d'échantillon 10. L'ensemble de cache 50 possède une ouverture 5A, 5B en vis-à-vis d'une partie centrale de chacun des emplacements de verre de lunettes 1 A et 1 B. Les gouttes G_{A}, respectivement G_{B}, traversent alors cette ouverture 5A, resp. 5B, avant d'arriver sur la surface du verre de lunettes A, resp. B, qui est exposée à travers l'ouverture.

Selon une amélioration facultative de l'ensemble de cache 50, chacune de ses ouvertures 5A, respectivement 5B, peut posséder un profil évasé en direction d'un bord du verre de lunettes A, resp. B, ce bord étant surélevé par l'inclinaison i du verre de lunettes. Une telle conception de l'ensemble de cache 50 concentre l'attention d'un observateur sur l'impact des gouttes à la surface des verres. L'efficacité du démonstrateur 100 est donc encore augmentée de cette façon.

Eventuellement, l'ensemble de cache 50 peut être amovible ou pivotant, pour faciliter le positionnement des verres de lunettes A et B dans les emplacements 1 A et 1 B.

Enfin, il est rappelé que le mode de réalisation qui a été décrit en détail ci-dessus n'a été donné qu'à titre d'exemple pour permettre de reproduire l'invention directement. Toutefois, il est entendu que les valeurs numériques et les formes qui ont été citées peuvent adaptées en fonction du type d'articles concernés et des caractéristiques recherchées pour les gouttes.

## Revendications

1. Démonstrateur (100) d'une propriété hydrophobe d'un échantillon, ledit démonstrateur comprenant :
- un support d'échantillon (10), comportant au moins un emplacement (1 A, 1 B) d'échantillon agencé pour exposer une surface de l'échantillon placé sur ledit support, avec une inclinaison (i) de la surface de l'échantillon par rapport à une direction verticale (D) ;
- un réservoir supérieur (20) adapté pour contenir une quantité d'eau déminéralisée, avec au moins un trou (23, 24) dans un fond (22) dudit réservoir, et disposé au dessus du support d'échantillon de sorte que des gouttes d'eau (G_{A}, G_{B}) tombent une à une par ledit trou sur la surface de l'échantillon ; et
- un système d'alimentation du réservoir supérieur en eau déminéralisée, adapté pour maintenir un niveau d'eau (N) sensiblement constant au dessus du fond du réservoir,
dans lequel le trou possède un diamètre et un profil d'alésage adaptés pour que les gouttes se forment et tombent spontanément à intervalles de temps réguliers.

2. Démonstrateur selon la revendication 1, adapté pour que les gouttes (G_{A}, G_{B}) se forment et tombent par le trou (23, 24) avec une fréquence comprise entre 0,2 Hz et 2 Hz.

3. Démonstrateur selon la revendication 1 ou 2, dans lequel le trou (23, 24) possède un alésage cylindrique dans une partie supérieure (1) dudit trou, et un alésage conique dans une partie inférieure (2) dudit trou, avec un diamètre d'alésage qui croît vers le bas dans la partie inférieure du trou.

4. Démonstrateur selon la revendication 3, dans lequel le fond (22) du réservoir supérieur (20) possède une épaisseur (e) comprise entre 2,5 mm et 3,5 mm à l'endroit du trou (23, 24), l'alésage cylindrique de la partie supérieure (1) du trou possède un diamètre (d₁) compris entre 0,6 mm et 0,8 mm, l'alésage conique de la partie inférieure (2) du trou possède un demi-angle d'ouverture (α₂) compris entre 10°et 30°, et les alésages cylindrique et conique ont une jonction (j) située entre 0,25 mm et 2 mm à partir d'une surface externe inférieure (Sₑ) dudit fond du réservoir supérieur.

5. Démonstrateur selon l'une quelconque des revendications précédentes, dans lequel une forme du réservoir supérieur (20) et le système d'alimentation en eau déminéralisée sont adaptés pour que la quantité d'eau contenue dans ledit réservoir supérieur avec le niveau d'eau (N) sensiblement constant, produise une pression hydrostatique comprise entre 2,5 millibars et 5 millibars à l'endroit du trou (23, 24).

6. Démonstrateur selon l'une quelconque des revendications précédentes, comprenant en outre un bac inférieur (30) disposé pour récupérer les gouttes (G_{A}, G_{B}) tombées sur la surface de l'échantillon.

7. Démonstrateur selon la revendication 6, dans lequel le système d'alimentation du réservoir supérieur en eau déminéralisée comprend un dispositif de pompage (40) pour recharger le réservoir supérieur (20) à partir d'un contenu en eau déminéralisée du bac inférieur (30).

8. Démonstrateur selon l'une quelconque des revendications précédentes, dans lequel le support d'échantillon (10) est adapté pour ajuster de façon variable l'inclinaison (i) de la surface de l'échantillon par rapport à la direction verticale (D).

9. Démonstrateur selon l'une quelconque des revendications précédentes, dans lequel une hauteur (h) de chute des gouttes (G_{A}, G_{B}), mesurée entre le trou (23, 24) et un point d'impact des dites gouttes sur la surface de l'échantillon, est comprise entre 5 cm et 20 cm, de préférence entre 7 cm et 15 cm.

10. Démonstrateur selon l'une quelconque des revendications précédentes, dans lequel :
- le support d'échantillon (10) comporte plusieurs emplacements d'échantillons (1 A, 1B), lesdits emplacements étant agencés pour exposer côte à côte des surfaces respectives d'au moins deux échantillons placés sur ledit support, avec la même inclinaison (i) des dites surfaces des échantillons par rapport à la direction verticale (D) ; et
- le réservoir supérieur (20) est pourvu d'au moins deux trous identiques (23, 24), disposés un à un au droit des emplacements d'échantillons (1 A, 1B), de sorte que des gouttes identiques (G_{A}, G_{B}) se forment et tombent sur les surfaces respectives des échantillons.

11. Démonstrateur selon l'une quelconque des revendications précédentes, dans lequel le support d'échantillon (10) est adapté pour recevoir au moins un verre de lunettes (A, B) formant échantillon, de façon que les gouttes (G_{A}, G_{B}) tombent sur une surface dudit verre de lunettes.

12. Démonstrateur selon la revendication 11, comprenant en outre un ensemble de cache (50) disposé au dessus du support d'échantillon (10), avec une ouverture (5A, 5B) située en vis-à-vis d'une partie centrale de chaque emplacement de verre de lunettes (1 A, 1B), les gouttes (G_{A}, G_{B}) traversant ladite ouverture avant d'arriver sur la surface du verre de lunettes (A, B) exposée à travers l'ouverture.

13. Démonstrateur selon la revendication 12, dans lequel chaque ouverture (5A, 5B) de l'ensemble de cache (50) possède un profil évasé en direction d'un bord du verre de lunettes (A, B) correspondant, ledit bord étant surélevé par l'inclinaison (i) dudit verre de lunettes.

## Patentansprüche

1. Demonstrierer (100) von einer hydrophoben Eigenschaft einer Probe, wobei der Demonstrierer Folgendes aufweist:
- einen Probenhalter (10), der mindestens einen Probenplatz (1A, 1B) aufweist, der angeordnet ist, um eine Fläche der Probe, die auf dem Halter platziert ist, mit einer Neigung (i) der Fläche der Probe in Bezug zu einer vertikalen Richtung (D) freizulegen;
- einen oberen Behälter (20), der angepasst ist, um eine Menge demineralisiertes Wasser zu enthalten, mit mindestens einem Loch (23, 24) in einem Boden (22) des Behälters, und der derart über dem Probenhalter angeordnet ist, dass Wassertropfen (G_{A}, G_{B}) einzeln durch das Loch auf die Fläche der Probe fallen; und
- ein System zur Versorgung des oberen Behälters mit demineralisiertem Wasser, das angepasst ist, um einen Wasserpegel (N) im Wesentlichen konstant über dem Boden des Behälters zu halten,
wobei das Loch einen Durchmesser und ein Bohrungsprofil besitzt, die angepasst sind, damit die Tropfen sich spontan in regelmäßigen Zeitintervallen bilden und fallen.

2. Demonstrierer nach Anspruch 1, der angepasst ist, damit die Tropfen (G_{A}, G_{B}) sich bilden und durch das Loch (23, 24) mit einer Frequenz fallen, die zwischen 0,2 Hz und 2 Hz umfasst.

3. Demonstrierer nach Anspruch 1 oder 2, wobei das Loch (23, 24) eine zylindrische Bohrung in einem oberen Teil (1) des Loches und eine kegelförmige Bohrung in einem unteren Teil (2) des Loches mit einem Bohrungsdurchmeesser besitzt, der nach unten im unteren Teil des Loches zunimmt.

4. Demonstrierer nach Anspruch 3, wobei der Boden (22) des oberen Behälters (20) eine Dicke (e) besitzt, die zwischen 2,5 mm und 3,5 mm an der Stelle des Loches (23, 24) umfasst, wobei die zylindrische Bohrung des oberen Teils (1) des Loches einen Durchmesser (d₁) besitzt, der zwischen 0,6 mm und 0,8 mm umfasst, wobei die kegelförmige Bohrung des unteren Teils (2) des Loches einen Öffnungshalbwinkel (α₂) besitzt, der zwischen 10° und 30° umfasst, und die zylindrischen und konischen Bohrungen eine Verbindung (j) aufweisen, die sich zwischen 0,25 mm und 2 mm ausgehend von einer unteren Außenfläche (Sₑ) des Bodens des oberen Behälters befindet.

5. Demonstrierer nach einem der vorhergehenden Ansprüche, wobei eine Form des oberen Behälters (20) und das System zur Versorgung mit demineralisiertem Wasser angepasst sind, damit die Wassermenge, die in dem oberen Behälter mit dem im Wesentlichen konstanten Wasserpegel (N) enthalten ist, einen hydrostatischen Druck erzeugt, der an der Stelle des Loches (23, 24) zwischen 2,5 Millibar und 5 Millibar umfasst.

6. Demonstrierer nach einem der vorhergehenden Ansprüche, der ferner ein unteres Gefäß (30) aufweist, das angeordnet ist, um die Tropfen (G_{A}, G_{B}), die auf die Fläche der Probe gefallen sind, zu sammeln.

7. Demonstrierer nach Anspruch 6, wobei das System zur Versorgung des oberen Behälters mit demineralisiertem Wasser eine Pumpvorrichtung (40) aufweist, um den oberen Behälter (20) ausgehend von einem Inhalt an demineralisiertem Wasser des unteren Gefäßes (30) wieder aufzufüllen.

8. Demonstrierer nach einem der vorhergehenden Ansprüche, wobei der Probenhalter (10) angepasst ist, um die Neigung (i) der Fläche der Probe in Bezug zur vertikalen Richtung (D) auf variable Art und Weise einzustellen.

9. Demonstrierer nach einem der vorhergehenden Ansprüche, wobei eine Fallhöhe (h) der Tropfen (G_{A}, G_{B}), die zwischen dem Loch (23, 24) und einem Auftreffpunkt der Tropfen auf der Fläche der Probe gemessen wird, zwischen 5 cm und 20 cm, vorzugsweise zwischen 7 cm und 15 cm, umfasst.

10. Demonstrierer nach einem der vorhergehenden Ansprüche, wobei:
- der Probenhalter (10) mehrere Probenplätze (1A, 1B) aufweist, wobei die Plätze angeordnet sind, um entsprechende Flächen von mindestens zwei Proben, die auf dem Träger platziert sind, nebeneinander mit der gleichen Neigung (i) der Flächen der Proben in Bezug zur vertikalen Richtung (D) freizulegen; und
- der obere Behälter (20) mit mindestens zwei identischen Löchern (23, 24) versehen ist, die einzeln den Probenplätzen (1A, 1B) gegenüber angeordnet sind, derart, dass identische Tropfen (G_{A}, G_{B}) sich bilden und auf die entsprechenden Flächen der Proben fallen.

11. Demonstrierer nach einem der vorhergehenden Ansprüche, wobei der Probenhalter (10) angepasst ist, um mindestens ein Brillenglas (A, B), das die Probe bildet, derart aufzunehmen, dass die Tropfen (G_{A}, G_{B}) auf eine Fläche des Brillenglases fallen.

12. Demonstrierer nach Anspruch 11, der ferner eine Abdeckungsbaugruppe (50), die über dem Probenhalter (10) angeordnet ist, mit einer Öffnung (5A, 5B) aufweist, die sich einem mittleren Teil von jedem Brillenglasplatz (1A, 1B) gegenüberliegend befindet, wobei die Tropfen (G_{A}, G_{B}) die Öffnung durchqueren, bevor sie auf der Fläche des Brillenglases (A, B) ankommen, die durch die Öffnung freiliegt.

13. Demonstrierer nach Anspruch 12, wobei jede Öffnung (5A, 5B) der Abdeckungsbaugruppe (50) ein konisch in Richtung eines Randes des entsprechenden Brillenglases (A, B) erweitertes Profil aufweist, wobei der Rand durch die Neigung (i) des Brillenglases hoch steht.

## Claims

1. Demonstrator (100) of a hydrophobic property of a sample, said demonstrator comprising:
- a sample support (10), comprising at least one sample holder (1A, 1B) arranged to expose one surface of the sample placed on said support, with an inclination (i) of the surface of the sample to a vertical direction (D);
- a upper reservoir (20) designed to contain a quantity of deionized water, with at least one hole (23, 24) in the bottom (22) of said reservoir, and located above the sample support so that water droplets (G_{A}, G_{B}) fall one by one through said hole onto the surface of the sample; and
- a system for supplying the upper reservoir with deionized water, designed to maintain a substantially constant water level (N) above the bottom of the reservoir,
in which the hole possesses a diameter and a bore profile designed so that the droplets form and fall spontaneously at regular time intervals.

2. Demonstrator according to Claim 1, designed so that the droplets (G_{A}, G_{B}) form and fall through the hole (23, 24) with a frequency of between 0.2 Hz and 2 Hz.

3. Demonstrator according to either of Claims 1 and 2, in which the hole (23, 24) possesses a cylindrical bore in a upper part (1) of said hole, and a conical bore in a lower part (2) of said hole, with a bore diameter which increases towards the lower part of the hole.

4. Demonstrator according to Claim 3, in which the bottom (22) of the upper reservoir (20) possesses a thickness (e) of between 2.5 mm and 3.5 mm at the position of the hole (23, 24), the cylindrical bore of the upper part (1) of the hole possesses a diameter (d₁) of between 0.6 mm and 0.8 mm, the conical bore of the lower part (2) of the hole possesses a half-angle (α₂) of between 10° and 30°, and the cylindrical and conical bores have a junction (j) located between 0.25 mm and 2 mm from a lower external surface (Sₑ) of said bottom of the upper reservoir.

5. Demonstrator according to any one of the preceding claims, in which the shape of the upper reservoir (20) and the system for supplying deionized water are designed so that the quantity of water contained in said upper reservoir with the substantially constant water level (N) produces a hydrostatic pressure of between 2.5 mbar and 5 mbar at the position of the hole (23, 24).

6. Demonstrator according to any one of the preceding claims, furthermore comprising a lower tray (30) placed so as to recover the droplets (G_{A}, G_{B}) after they have fallen onto the surface of the sample.

7. Demonstrator according to Claim 6, in which the system for supplying the upper reservoir with deionized water comprises a pumping device (40) for refilling the upper reservoir (20) with the deionized water contents of the lower tray (30).

8. Demonstrator according to any one of the preceding claims, in which the sample support (10) is designed for variably adjusting the inclination (i) of the surface of the sample to the vertical direction (D).

9. Demonstrator according to any one of the preceding claims, in which the drop height (h) of the droplets (G_{A}, G_{B}), measured between the hole (23, 24) and a point of impact of said droplets on the surface of the sample, is between 5 cm and 20 cm, preferably between 7 cm and 15 cm.

10. Demonstrator according to any one of the preceding claims, in which:
- the sample support (10) comprises several sample holders (1A, 1B), said holders being arranged to expose respective surfaces of at least two samples placed side by side on said support, with the same inclination (i) of said sample surfaces to the vertical direction (D); and
- the upper reservoir (20) is provided with at least two identical holes (23, 24), each one placed directly above the sample holders (1A, 1B) so that the identical droplets (G_{A}, G_{B}) form and fall onto the respective surfaces of the samples.

11. Demonstrator according to any one of the preceding claims, in which the sample support (10) is designed to receive at least one spectacle lens (A, B) forming the sample, so that the droplets (G_{A}, G_{B}) fall onto a surface of said spectacle lens.

12. Demonstrator according to Claim 11, furthermore comprising a cover plate assembly (50) placed on top of the sample support (10) with an opening (5A, 5B) located facing a central part of each spectacle lens (1A, 1B) holder, the droplets (G_{A}, G_{B}) passing through said opening before arriving at the exposed surface of the spectacle lens (A, B) through the opening.

13. Demonstrator according to Claim 12, in which each opening (5A, 5B) of the cover plate assembly (50) possesses a profile flared towards one edge of the corresponding spectacle lens (A, B), said edge being raised by the inclination (i) of said spectacle lens.
